# EUROPÄISCHE PATENTSCHRIFT

(11) **EP 1 025 907 B1**
(45) Veröffentlichungstag und Bekanntmachung des Hinweises auf die Patenterteilung: **28.06.2006**
(21) Anmeldenummer: 99124599.4
(22) Anmeldetag: 10.12.1999
(51) Int. Cl.: B03B 5/52, B03B 11/00

(54) **Wäscher zum Abtrennen feiner Stoffe von groben Bestandteilen mittels einer Flüssigkeit**
Washer for separating fine substances from coarse components with a liquid
Laveur pour la séparation de matières fines de gros composants au moyen d'un liquide

(30) Priorität: 05.02.1999 DE 29902028 U
(43) Veröffentlichungstag der Anmeldung: 09.08.2000
(73) Patentinhaber: Werkstoff + Funktion Grimmel Wassertechnik GmbH, 61239 Ober-Mörlen (DE)
(72) Erfinder: Grimmel, Walter, 61239 Ober-Mörlen (DE)
(74) Vertreter: Hebing, Norbert

(56) Entgegenhaltungen:
- WO-A-93/01000
- WO-A-95/19212
- WO-A-98/45020
- DE-A- 4 428 415
- DE-B- 1 203 191
- GB-A- 531 682
- US-A- 1 695 021
- US-A- 2 189 418
- US-A- 2 283 992
- US-A- 2 428 789
- US-A- 4 701 266
- H. SCHÜSSLER: "RECHENGUTWÄSCHE- VERSUCH EINER BESTANDSAUFNAHME" KORRESPONDENZ ABWASSER, Bd. 39, Nr. 9, September 1992 (1992-09), Seiten 1362-1369, XP000296948 ST. AUGUSTIN;DE

## Beschreibung

Die Erfindung betrifft einen Wäscher zum Abtrennen feiner Stoffe von groben Teilen, insbesondere zur Abtrennung organischer Stoffe von Rechen- und Siebgut in Kläranlagen, welcher eine Wirbelkammer mit einem darin eingetauchten, mit hoher Geschwindigkeit antreibbaren Wirbelrad und einem Schneckenförderer zum Transport der gereinigten, groben Bestandteile zu einem Abgabeende, welcher eine in einem rohrförmigen Gehäuse angeordnete Förderschnecke hat.

Zwei unterschiedliche Ausführungsformen von Wäschern der vorstehenden Art sind in dem Artikel "Rechengutwäsche - Versuch einer Bestandsaufnahme" der Zeitschrift "Korrespondenz Abwasser", 39. Jahrgang, Heft 9, 1992, Seiten 1362 bis 1369 beschrieben. Bei der zuerst beschriebenen Ausführungsform wird das Rechengut in einen großvolumigen Behälter eingegeben, dem Waschwasser zugeführt wird. Der Behälter hat das Wirbelrad, welches das Waschwasser mit dem Rechengut kräftig durchmischt, so dass sich die feineren Stoffe, insbesondere organische Stoffe, vom Rechengut lösen und mit dem Waschwasser abgeführt werden können. Das gewaschene Rechengut wird von dem Schneckenförderer aus dem Behälter heraustransportiert und dann am Abgabeende abgeworfen.

Nachteilig bei einer solchen Ausführungsform ist es, dass diese wegen des großen Behälters ein großes Bauvolumen aufweist, einen hohen Wasserverbrauch hat und teuer in der Herstellung ist. Um diese Nachteile zu beheben, beschreibt die genannte Veröffentlichung auch schon eine Rechengut-Wirbelwäsche im Zulaufgerinne einer kommunalen Kläranlage. Hierzu wird das Wirbelrad in der Sohle eines Gerinnes vor einem schräg nach oben aus dem Gerinne herausführenden Schneckenförderer angeordnet. Das Wasser mit den feineren Stoffen soll dann durch ein Sieb laufen, während die groberen Stoffe von der Förderschnecke über das Sieb zu einer Abwurfstelle transportiert werden. Ein solcher Rechengut-Wirbelwäscher ist zwar einfacher und kostengünstiger als der zuvor beschriebene Rechengut-Wirbelwäscher mit einem großvolumigen Behälter, hat jedoch nur einen geringen Reinigungseffekt, weil die von dem Wirbelrad in das Rohabwasser eingebrachte Energie sich undefiniert im Gerinne zu den Seiten hin ausbreiten kann und deshalb nur unvollkommen für die eigentliche Wäsche zu nutzen ist und bezogen auf die geringe Konzentration des Rechengutes nur eine relativ geringe Behandlungszeit zur Verfügung steht. Des Weiteren sind die erforderlichen Wartungsarbeiten am Wirbelrad und dem zugehörigen Antrieb nur unter erschwerten Bedingungen möglich.

Der Erfindung liegt das Problem zugrunde, einen Wäscher der eingangs genannten Art so zu gestalten, dass feine Teile von groben Stoffen möglichst wirkungsvoll abgetrennt werden können, ohne dass der Wäscher großvolumig ausgebildet werden muss und dadurch teuer in der Herstellung ist.

Dieses Problem wird erfindungsgemäß dadurch gelöst, dass der Schneckenförderer ein Einlaufende für die zu behandelnden, noch ungewaschenen, groben Teile hat und dass die Wirbelkammer seitlich des Schneckenförderers zwischen dem Einlaufende und dem Abgabeende angeordnet ist und über einen Durchlass in der Mantelfläche des rohrförmigen Gehäuses des Schneckenförderers mit dem Inneren des Gehäuses Verbindung hat und dass das Gehäuse Ableitmittel für die die feineren Stoffe enthaltende Flüssigkeit aufweist.

Während bei dem Wäscher nach dem eingangs genannten Stand der Technik die Wirbelkammer dem Schneckenförderer vorgeschaltet ist, werden bei dem erfindungsgemäßen Wäscher mit dem Wirbelrad in der Wirbelkammer die groberen Teile mit den feineren Stoffen aus der Förderschnecke herausgespült und in der Wirbelkammer intensiv verwirbelt. Dadurch kommen selbst stark an den groberen Teilen haftende Stoffe von den groben Teilen frei und können mit der Reinigungsflüssigkeit abgeführt werden. Der erfindungsgemäße Wäscher arbeitet somit mit Wasser, welches die Verunreinigungen in konzentrierter Form enthält. Versuche zeigten, dass der erfindungsgemäße Wäscher für die Reinigung von Rechengut kommunaler Kläranlagen sehr wirksam ist. Die Erfindung ist jedoch nicht auf einen solchen Anwendungsfall beschränkt, da es zahlreiche andere Einsatzgebiete gibt, bei denen gröbere Teile von feineren Stoffen befreit werden müssen, beispielsweise mit Erdreich verunreinigte Kartoffeln vor ihrer Weiterverarbeitung.

Besonders einfach ist der Wäscher ausgebildet, wenn gemäß einer vorteilhaften Weiterbildung der Erfindung der Schneckenförderer horizontal oder steigend angeordnet und zusammen mit der Wirbelkammer zum Fluten mit der zu behandelnden Flüssigkeit über einen Teil der Höhe der Wirbelkammer und dem Durchmesser des Gehäuses ausgebildet sind.

Die Reinigungsflüssigkeit vermag entgegengesetzt zur Förderrichtung der groberen Teile zu fließen und verunreinigt deshalb nicht bereits gewaschenes Gut, wenn gemäß einer anderen Weiterbildung der Erfindung die Ableitmittel für die die feineren Inhaltsstoffe aufweisende Flüssigkeit am Einlaufende des Schneckenförderers vorgesehen sind.

Einen besonders hohen Reinigungseffekt erreicht man, wenn der Schneckenförderer in Förderrichtung der Förderschnecke gesehen hinter der Wirbelkammer einen Waschflüssigkeitsanschluss hat, weil dann die bereits gewaschenen, groberen Teile nochmals mit sauberer Reinigungsflüssigkeit Kontakt bekommen.

Zur weiteren Verbesserung der Reinigungswirkung trägt es bei, wenn gemäß einer anderen Weiterbildung der Erfindung die Wirbelkammer einen Waschflüssigkeitsanschluss hat.

Besonders günstig ist die Wirbelkammer ausgebildet, wenn sie in der Draufsicht gesehen in etwa die Form eines Dreiecks hat und mit einer einen Schenkel des Dreiecks bildenden Seite mit dem Gehäuse des Schneckenförderers verbunden ist und wenn von oben her auf die Wirbelkammer ein Motor zum Antrieb des Wirbelrades angeordnet ist. Natürlich sind auch Abwandlungen von der dreieckigen Form möglich, beispielsweise eine Halbrundscheibe.

Eine optimale Verwirbelung lässt sich in der Wirbelkammer erreichen, wenn die Wirbelkammer einen trogförmigen Boden hat und an der Seite des Gehäuses des Schneckenförderers bis unterhalb des Niveaus dieses Gehäuses führt und dort durch eine in etwa senkrechte Prallwand mit dem Gehäuse verbunden ist.

Die Zufuhr von Rechengut zu dem Wäscher kann ohne separate Fördermittel erfolgen, wenn die Förderschnecke vom Einlaufende her entlang der Abwurfkante eines Rechenräumers verlängert ist.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: einen schematischen Querschnitt durch einen Teilbereich einer Rechenanlage mit dem erfindungsgemäßen Wäscher,
- Fig.2: eine im Maßstab vergrößerte Seitenansicht des Wäschers,
- Fig.3: einen Schnitt durch den Wäscher entlang der Linie IV - IV in Figur 2,
- Fig.4: eine Draufsicht auf den Wäscher.

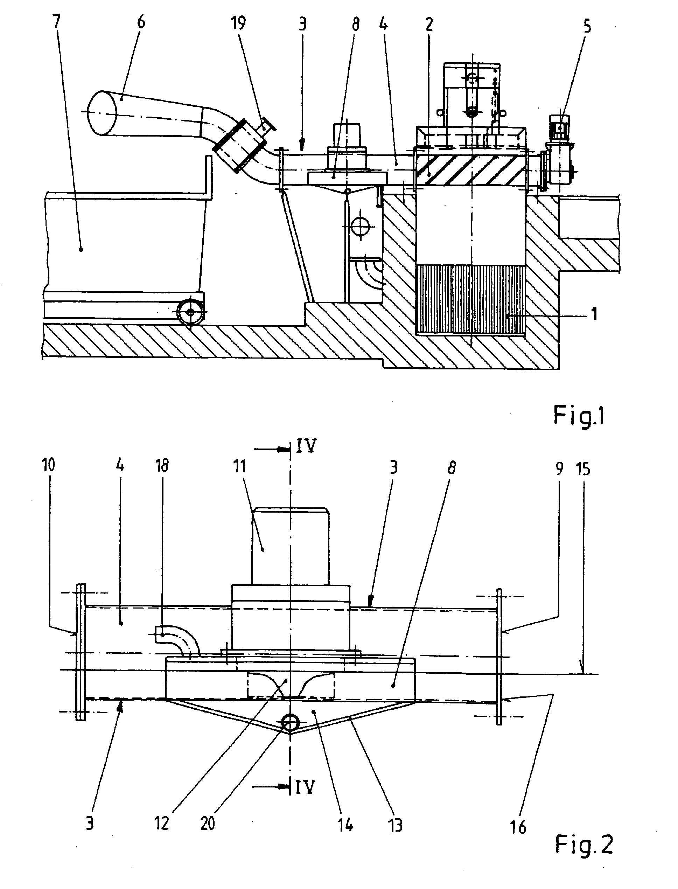

Die Figur 1 zeigt von einer Kläranlage einen Rechen 1, auf dem sich nicht dargestelltes, im Rohabwasser enthaltenes Rechengut sammelt. Mittels eines ebenfalls nicht gezeigten Räumers wird dieses Rechengut einer sich horizontal erstreckenden Förderschnecke 2 zugeführt. Diese ist Bestandteil eines Schneckenförderers 3 und verläuft im Bereich der Abwurfkante des Räumers nach oben hin offen, führt dann jedoch seitlich des Rechens 1 in ein rohrförmiges Gehäuse 4 des Schneckenförderers 3 hinein. Zum Antrieb der Förderschnecke 2 dient ein Motor 5.

Das Rechengut wird von der Förderschnecke 2 zu einem Auslassrohr 6 gefördert, von dem aus es in einen darunter angeordneten Container 7 fällt. Wichtig für die Erfindung ist eine seitlich am Gehäuse 4 angeordnete Wirbelkammer 8, welche zusammen mit dem Schneckenförderer 3 einen Wäscher bildet und deren Gestaltung anhand der nachfolgenden Figuren näher erläutert wird. Waschflüssigkeit wird über einen Waschflüssigkeitsanschluss 19 in den Schneckenförderer 3 eingegeben und strömt durch ihn hindurch zur Seite mit dem Rechen 1.

Die Figur 2 zeigt im Maßstab vergrößert den Schneckenförderer 3 mit einem Einlaufende 9 an der rechten und einem Abgabeende 10 an der linken Seite. Ebenfalls erkennt man die Wirbelkammer 8. Auf der Oberseite der Wirbelkammer 8 ist ein Motor 11 angeordnet, der ein in der Wirbelkammer 8 eingebautes Wirbelrad 12 anzutreiben vermag. Die Wirbelkammer 8 hat einen trogförmigen Boden 13, der weiter nach unten führt als die Unterkante des rohrförmigen Gehäuses 4. Dadurch entsteht entlang dieses Gehäuses 4 eine in etwa senkrecht nach oben führende, dreieckige Prallwand 14. Bei Betrieb der Vorrichtung ist der untere Bereich des rohrförmigen Gehäuses 4 und der Wirbelkammer 8 bis in Höhe eines eingezeichneten Flüssigkeitsspiegels 15 in Flüssigkeit eingetaucht, die in Figur 2 gesehen von links nach rechts fließt und durch Ableitmittel 16 das Gehäuse 4 verlässt. In der Praxis ist der Durchmesser der in Figur 2 gezeigten Förderschnecke 2 kleiner als der Durchmesser des rohrförmigen Gehäuses 4, so dass die Ableitmittel 16 einfach dadurch gebildet sein können, dass das Gehäuse 4 zur rechten Seite hin offen ist.

Ebenfalls zu erkennen sind in der Figur 2 Waschflüssigkeitsanschlüsse 18, 20 über die Waschflüssigkeit in die Wirbelkammer 8 einströmt. Diese Waschflüssigkeit gelangt von der Wirbelkammer 8 in den Schneckenförderer 3 und strömt von dort nach rechts zum Einlaufende 9 und von dort zurück in den Bereich des in Figur 1 dargestellten Rechens 1.

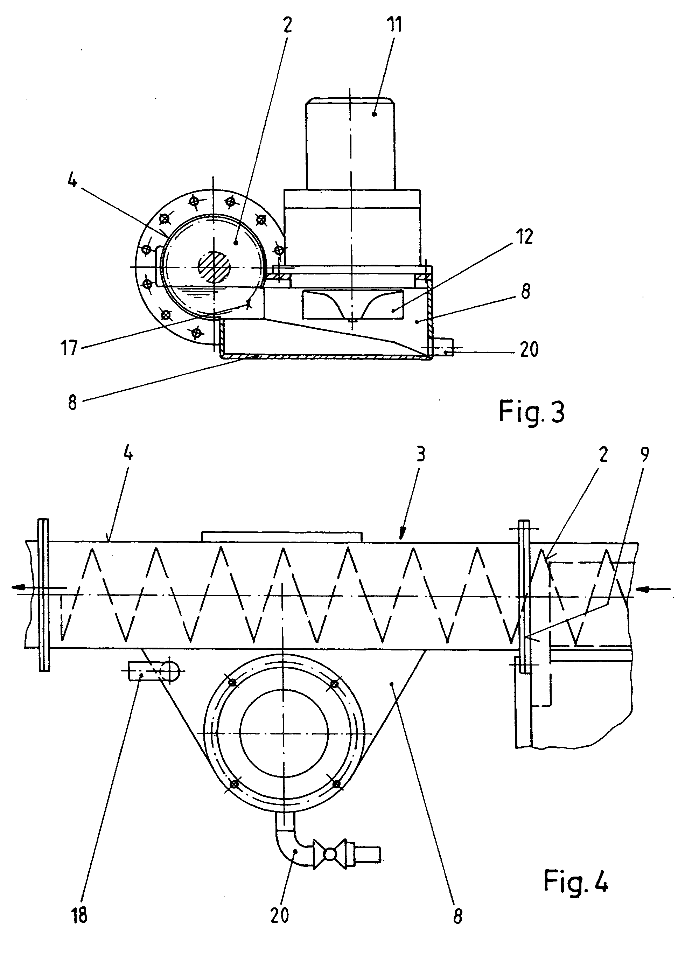

In Figur 3 erkennt man, dass das Gehäuse 4 im unteren Bereich seiner Mantelfläche einen Durchlass 17 hat, über den er mit der Wirbelkammer 8 in Verbindung steht. Dadurch wird durch das Wirbelrad 12 Rechengut aus der Förderschnecke 2 herausgespült, in der Wirbelkammer 8 intensiv verwirbelt und dabei von anhaftenden, feineren Stoffen, insbesondere Organik, befreit.

Die Figur 4 zeigt, dass die Wirbelkammer 8 in der Draufsicht in etwa die Form eines gleichschenkligen Dreiecks hat und mit einer Seite am Gehäuse 4 des Schneckenförderers 3 angebracht ist. Weiterhin zeigt diese Figur 4, dass die Förderschnecke 2 über das Einlaufende 9 hinaus verlängert ist, so dass Rechengut dort in die Förderschnecke 2 gelangen und anschließend durch das rohrförmige Gehäuse 4 gefördert werden kann.

### Bezugszeichenliste

- 1: Rechen
- 2: Förderschnecke
- 3: Schneckenförderer
- 4: Gehäuse
- 5: Motor

- 6: Auslassrohr
- 7: Container
- 8: Wirbelkammer
- 9: Einlaufende
- 10: Abgabeende

- 11: Motor
- 12: Wirbelrad
- 13: Boden
- 14: Prallwand
- 15: Flüssigkeitsspiegel

- 16: Ableitmittel
- 17: Durchlass
- 18: Waschflüssigkeitsanschluss
- 19: Waschflüssigkeitsanschluss
- 20: Waschflüssigkeitsanschluss

## Patentansprüche

1. Wäscher zum Abtrennen feiner Stoffe von groben Teilen mittels einer Flüssigkeit, insbesondere zur Abtrennung organischer Stoffe von Rechen- und Siebgut in Kläranlagen, welcher eine Wirbelkammer (8) mit einem darin eingetauchten, mit hoher Geschwindigkeit antreibbaren Wirbelrad (12) und einem Schneckenförderer (3) zum Transport der gereinigten, groben Bestandteile zu einem Abgabeende (10) hat und welcher eine in einem rohrförmigen Gehäuse (4) angeordnete Förderschnecke (2) aufweist, **dadurch gekennzeichnet, dass** der Schneckenförderer (3) ein Einlaufende (9) für die zu waschenden, noch ungereinigten groben Teile hat und dass die Wirbelkammer (8) seitlich des Schneckenförderers (3) zwischen dem Einlaufende (9) und dem Abgabeende (10) angeordnet ist und über einen Durchlass (17) in der Mantelfläche des rohrförmigen Gehäuses (4) des Schneckenförderers (3) mit dem Inneren des Gehäuses (4) Verbindung hat und dass das Gehäuse (4) Ableitmittel für die die feineren Stoffe enthaltende Flüssigkeit aufweist.

2. Wäscher nach Anspruch 1, **dadurch gekennzeichnet, dass** der Schneckenförderer (3) horizontal oder steigend angeordnet und zusammen mit der Wirbelkammer (8) zum Fluten mit der zu behandelnden Flüssigkeit über einen Teil der Höhe der Wirbelkammer (8) und dem Durchmesser des Gehäuses (4) ausgebildet ist.

3. Wäscher nach Anspruch 2, **dadurch gekennzeichnet, dass** die Ableitmittel (16) für die die feineren Stoffe aufweisende Flüssigkeit am Einlaufende (9) des Schneckenförderers (3) vorgesehen sind.

4. Wäscher nach zumindest einem der vorangehenden Ansprüche, **dadurch gekennzeichnet, dass** der Schneckenförderer (3) in Förderrichtung der Förderschnecke (2) gesehen hinter der Wirbelkammer (8) einen Waschflüssigkeitsanschluss (19) hat.

5. Wäscher nach zumindest einem der vorangehenden Ansprüche, **dadurch gekennzeichnet, dass** die Wirbelkammer (8) einen Waschflüssigkeitsanschluss (18) hat.

6. Wäscher nach zumindest einem der vorangehenden Ansprüche, **dadurch gekennzeichnet, dass** die Wirbelkammer (8) in der Draufsicht gesehen in etwa die Form eines Dreiecks hat und mit einer einen Schenkel des Dreiecks bildenden Seite mit dem Gehäuse (4) des Schneckenförderers (3) verbunden ist und dass von oben her auf die Wirbelkammer (8) ein Motor (11) zum Antrieb des Wirbelrades (12) angeordnet ist.

7. Wäscher nach zumindest einem der vorangehenden Ansprüche, **dadurch gekennzeichnet, dass** die Wirbelkammer (8) einen trogförmigen Boden (13) hat und an der Seite des Gehäuses (4) des Schneckenförderers (3) bis unterhalb des Niveaus dieses Gehäuses (4) führt und dort durch eine in etwa senkrechte Prallwand (14) mit dem Gehäuse (4) verbunden ist.

8. Wäscher nach zumindest einem der vorangehenden Ansprüche, **dadurch gekennzeichnet, dass** die Förderschnecke (2) vom Einlaufende (9) her entlang der Abwurfkante eines Rechenräumers verlängert ist.

## Claims

1. A washer for separating fine substances from coarse components by means of a liquid, especially for separating organic substances from screenings in water treatment plants, comprising a whirlpool chamber (8) with a free-flow impeller (12) submerged therein, which can be driven at high speed and a helical conveyor (3) for transporting the purified coarse components to an outlet end (10) and comprising a conveyor screw (2) disposed in a tubular housing (4), **characterised in that** the helical conveyor (3) has an inlet end (9) for the non-purified coarse particles to be washed and that the whirlpool chamber (8) is arranged at the side of the helical conveyor (3) between the inlet end (9) and the outlet end (10) and is in communication with the interior of the housing (4) by means of an aperture (17) in the outer surface of the tubular housing (4) of the helical conveyor (3) and that the housing (4) has drainage means for the liquid containing the finer substances.

2. The washer according to claim 1, **characterised in that** the helical conveyor (3) is arranged horizontally or upwardly and together with the whirlpool chamber (8) is constructed for flooding with the liquid to be treated over a part of the height of the whirlpool chamber (8) and the diameter of the housing (4).

3. The washer according to claim 2, **characterised in that** the drainage means (16) for the liquid comprising the finer substances are provided at the inlet end (9) of the helical conveyor (3).

4. The washer according to at least one of the preceding claims, **characterised in that** the helical conveyor (3) has a washing liquid connection (19) after the whirlpool chamber (8) seen in the conveying direction of the conveyor screw (2).

5. The washer according to at least one of the preceding claims, **characterised in that** the whirlpool chamber (8) has a washing liquid connection (18).

6. The washer according to at least one of the preceding claims, **characterised in that** the whirlpool chamber (8) viewed from above is approximately triangular-shaped and is connected to the housing (4) of the helical conveyor (3) with one side forming a leg of the triangle and that a motor (11) for driving the free-flow impeller (12) is located on the whirlpool chamber (8) from the top.

7. The washer according to at least one of the preceding claims, **characterised in that** the whirlpool chamber (8) has a trough-shaped bottom (13) and on the side of the housing (4) of the helical conveyor (3) leads as far as below the level of this housing (4) and is there connected to the housing (4) by means of an approximately perpendicular deflecting wall (14).

8. The washer according to at least one of the preceding claims, **characterised in that** the conveyor screw (2) is extended from the inlet end (9) along the knife edge of a bar/grit screen.

## Revendications

1. Laveur pour la séparation de matières fines des composants grossiers, au moyen d'un liquide, notamment pour la séparation de matières organiques des matières retenues par grille ou par tamis dans des stations d'épuration, présentant une chambre de turbulences (8) avec une roue à turbulences (12) immergée dans cette dernière, pouvant être entraînée à de hautes vitesses et avec un convoyeur à vis (3) pour le transport des composants grossiers purifiés vers une extrémité de distribution (10) et comportant une vis de transport (2) disposée dans un carter tubulaire (4), **caractérisé en ce que** le convoyeur à vis (3) est doté d'une extrémité d'entrée (9) pour les composants grossiers non purifiés et **en ce que** la chambre de turbulences (8) est disposée latéralement du convoyeur à vis (3), entre l'extrémité d'entrée (9) et l'extrémité de distribution (10) et présente une liaison avec l'intérieur du carter (4) par l'intermédiaire d'un passage (17) dans la surface de l'enveloppe du carter tubulaire (4) du convoyeur à vis (4) et **en ce que** le carter (4) comporte des moyens de déversement pour le liquide contenant les matières les plus fines.

2. Laveur selon la revendication 1, **caractérisé en ce que** le convoyeur à vis (3) est disposé à l'horizontale ou sous forme montante et qu'il est conçu en association avec la chambre de turbulences (8) pour déferler avec le liquide à traiter (8) sur une partie de la hauteur de la chambre de turbulences (8) et du diamètre du carter (4).

3. Laveur selon la revendication 2, **caractérisé en ce que** les moyens de déversement (16) pour le liquide comportant les matières les plus fines sont prévus sur l'extrémité d'entrée (9) du convoyeur à vis (3).

4. Laveur selon au moins l'une quelconque des revendications précédentes, **caractérisé en ce que** vu dans le sens de transport de la vis de transport (2), le convoyeur à vis (3) comporte un raccord pour liquide de lavage (19), derrière la chambre de turbulences (8).

5. Laveur selon au moins l'une quelconque des revendications précédentes, **caractérisé en ce que** la chambre de turbulences (8) comporte un raccord pour le liquide de lavage (18).

6. Laveur selon au moins l'une quelconque des revendications précédentes, **caractérisé en ce que**, en vue aérienne, la chambre de turbulences (8) présente approximativement la forme d'un triangle et **en ce qu'**elle est reliée par une face formant un côté du triangle avec le carter (4) du convoyeur à vis (3) et **en ce que** par le dessus sur la chambre de turbulences (8), un moteur (11) est disposé pour l'entraînement de la roue à turbulences (12).

7. Laveur selon au moins l'une quelconque des revendications précédentes, **caractérisé en ce que** la chambre de turbulences (8) a un fond en forme d'auge (13) et sur le côté du carter (4) du convoyeur à vis (3) conduit jusque sous le niveau dudit carter (4) et y est reliée avec le carter (4) par une surface de réflexion (14) approximativement verticale.

8. Laveur selon au moins l'une quelconque des revendications précédentes, **caractérisé en ce qu'**à partir de l'extrémité d'entrée (9), la vis de transport (2) est prolongée le long d'un bord de déversement d'une salle de décantation à grille.
